# EUROPÄISCHE PATENTSCHRIFT

(11) **EP 1 493 521 B1**
(45) Veröffentlichungstag und Bekanntmachung des Hinweises auf die Patenterteilung: **19.10.2011**
(21) Anmeldenummer: 04014273.9
(22) Anmeldetag: 18.06.2004
(51) Int. Cl.: B23F 23/12

(54) **Werkzeugstösselvorrichtung, insbesondere für eine Wälz-Stoss-Maschine**
Tool ram device, in particular for a generating slotting machine
Dispositif de vérin pour un outil, en particulier pour une machine à mortaiser en développante

(30) Priorität: 04.07.2003 DE 10330130
(43) Veröffentlichungstag der Anmeldung: 05.01.2005
(73) Patentinhaber: ZEITLAUF GmbH antriebstechnik & Co.KG, 91207 Lauf/Pegnitz (DE)
(72) Erfinder: Grünig, Kurt, 2515 Préles (CH)
(74) Vertreter: Hübner, Gerd

(56) Entgegenhaltungen:
- DE-A1- 1 575 537
- DE-B- 1 106 147
- JP-A- 6 026 503

## Beschreibung

Die Erfindung betrifft eine Werkzeugstößelvorrichtung, insbesondere für eine Wälz-Stoß-Maschine zur Herstellung von Zahnrädern, mit den im Oberbegriff des Anspruches 1 angegebenen Merkmalen.

Gattungsgemäße Werkzeugstößelvorrichtungen sind als offenkundige Vorbenutzungen aus dem Stand der Technik bekannt und weisen eine ein Bearbeitungswerkzeug tragende Stößelwelle auf. Diese ist in einem Führungskanal eines Führungskopfes kombiniert dreh- und schiebbar geführt, wobei durch eine Hin- und Herverschiebung die Stößelwelle beispielsweise einen Stoß- und Rückhub zur Einarbeitung eines Zahnprofils in einen Zahnradrohling vollführt. Die Drehbewegung ist erforderlich, um am Zahnradrohling eine Schrägverzahnung herzustellen.

Die Antriebsvorrichtung für die Stößelwelle umfasst eine hydraulische Kolben-Zylinder-Anordnung für deren Schiebeantrieb und eine Dralleinheit für deren Drehantrieb. Der Arbeitszylinder des hydraulischen Antriebes ist im Führungskanal angelegt, wobei der Antriebskolben an der Stoßwelle angeordnet ist. Die Dralleinheit weist ein Drallwendelprofil an der Stößelwelle auf, das mit einem stationären Gegenprofil in Eingriff steht.

Bei bekannten Werkzeugstößelvorrichtungen sind der Arbeitszylinder des hydraulischen Antriebes und die Dralleinheit als gesonderte Komponenten ausgelegt, wobei die Dralleinheit auf einer Verlängerung der Stoßwelle ausgebildet ist. Dies bedeutet, dass die Stößelwelle verhältnismäßig lang ausgeführt sein muss, was eine entsprechende zusätzliche Masse mit sich bringt.

Die DE 1575537 A offenbart eine Gleitführung für einen Stößel an Wälzstoßmaschinen, bei der der Stößelschaft mit einer geraden oder schrägen Außenverzahnung in einer Innenverzahnung verschiebbar geführt ist. Diese Führung ist druckölgelagert.

Im Hinblick auf eine möglichst hohe Hubfrequenz der Stößelwelle ist anzustreben, die Stößelwelle möglichst kompakt zu halten, um die zu beschleunigenden Massen klein zu halten.

Davon ausgehend liegt der Erfindung die Aufgabe zugrunde, die Antriebsvorrichtung für die Stößelwelle so auszugestalten, dass ihre Masse erheblich verringert werden kann.

Diese Aufgabe wird durch die im Kennzeichnungsteil des Anspruches 1 angegebenen Merkmale gelöst. Demnach stehen das Drallwendelprofil und das Gegenprofil fluiddicht in Eingriff und das Gegenprofil bildet damit integral einen Abschlussdeckel des Arbeitszylinders. Durch diese Auslegung der Dralleinheit ist diese in den Arbeitszylinder integriert, sodass für die Dralleinheit keine zusätzliche Länge der Stößelwelle mehr notwendig ist. Gleichzeitig erfüllt das Drallwendelprofil eine Kolbenstangenfunktion und führt damit die Stößelwelle zusätzlich zum Führungskanal.

Gemäß einer bevorzugten Ausführungsform ist das Gegenprofil an das Drallwendelprofil der zugehörigen Stößelwelle direkt angeformt, insbesondere als Kunststoff-Mutter angegossen. Damit wird quasi automatisch eine optimale Formanpassung des Gegenprofils an das Drallwendelprofil erreicht, was eine besonders gute Abdichtung des Arbeitsraumes gegen ein Austreten von Hydraulikfluid mit sich bringt.

Durch den gemäß einer weiteren bevorzugten Ausführungsform vorgesehenen, mit dem Führungskopf lösbar verbundenen Tragring für das Gegenprofil ist letzteres insbesondere bei einer Ausbildung als Kunststoff-Mutter formstabil und positionsgenau gehalten.

Weiterhin kann die Stößelwelle mit dem das Gegenprofil tragenden Teil gemeinsam austauschbar an der Werkzeugstößelvorrichtung angebracht sein. Damit ist ein rationeller Wechsel der Stößelwelle bei Umrüstung beispielsweise einer Wälz-Stoß-Maschine zur Erzielung einer anderen Steigungshöhe des Drallwendelprofils möglich. Umrüstzeiten inklusive der an anderer Stelle einer Wälz-Stoß-Maschine durchzuführenden Rundrichtung des Stoßwerkzeuges in der Größenordnung von etwa 15 Minuten bedeuten gegenüber der Dauer bei bekannten Werkzeugstößelvorrichtungen einen erheblichen zeitlichen Vorteil.

Eine hydrostatische Lagerung der Stößelwelle im Führungskanal bzw. im Gegenprofil ist bezüglich einer lagegenauen Führung der Stößelwelle von Vorteil.

Schließlich betrifft die Erfindung eine Wälz-Stoß-Maschine zur Herstellung von Zahnrädern, deren Stoßwelle zur Halterung des Stoßwerkzeuges durch eine Werkzeugstößelvorrichtung der vorstehend erörterten Art geführt und angetrieben ist.

Weitere Merkmale, Vorteile und Einzelheiten der Erfindung sind der nachfolgenden Beschreibung entnehmbar, in der ein Ausführungsbeispiel anhand der beigefügten Zeichnungen näher erläutert wird. Es zeigen:
- Fig. 1: einen Axialschnitt durch eine Wälz-Stoß-Maschine,
- Fig. 2: einen Schnitt entlang der Linie B-B gemäß Fig. 1 sowie
- Fig. 3: einen vergrößerten Detail-Axialschnitt der Lager- und Antriebsvorrichtung der Wälz-Stoß-Maschine nach Fig. 1.

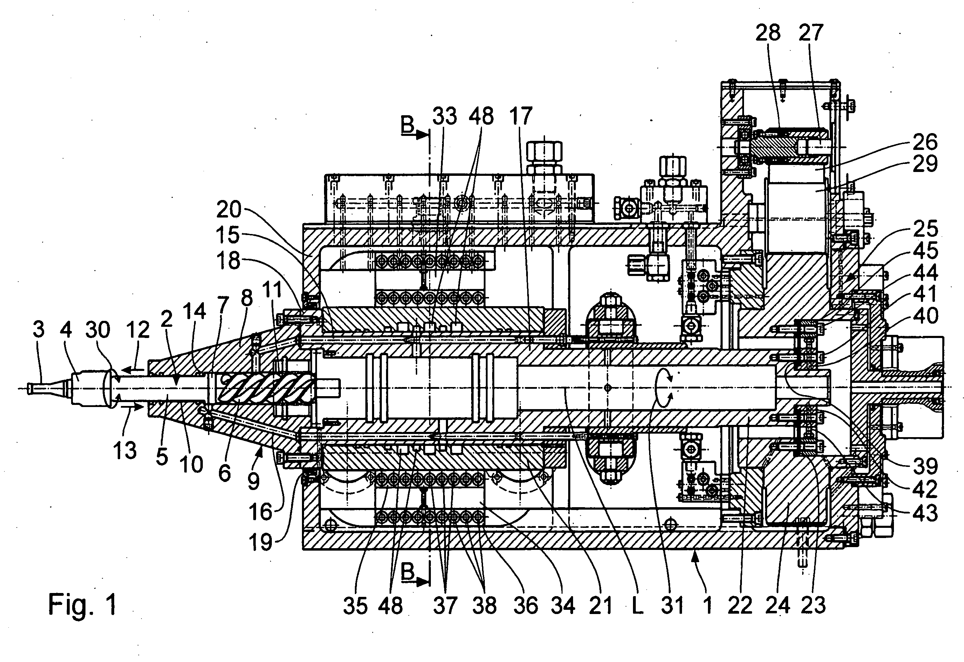

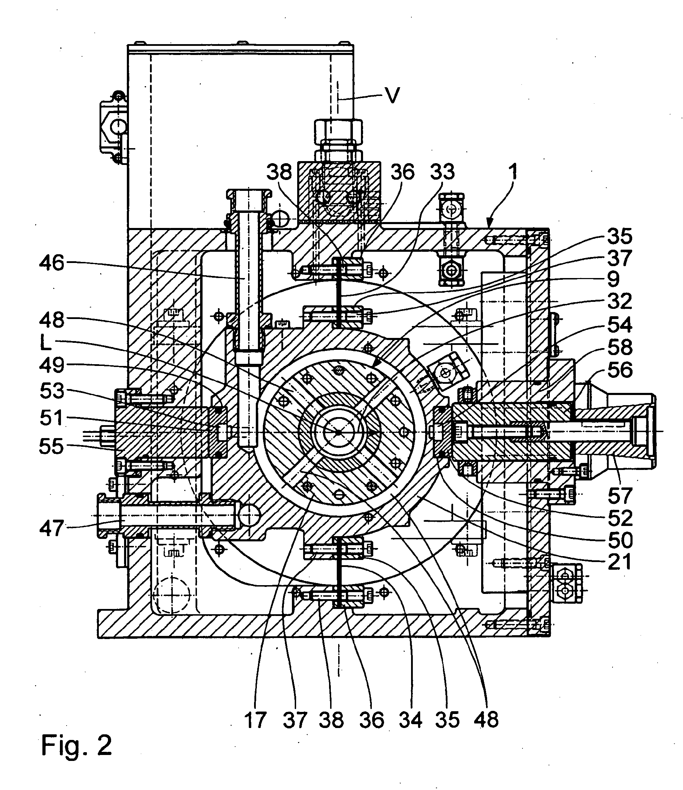

Wie in den Fig. 1 und 2 dargestellt ist, weist eine Wälz-Stoß-Maschine ein Maschinengestell auf, das im Wesentlichen als kastenförmiges Gehäuse 1 ausgebildet ist. Darin ist über eine noch näher zu erörternde Lager- und Antriebseinrichtung eine als Stößel ausgebildeten Stoßwelle 2 in verschiedenen Richtungen beweglich und angetrieben gelagert, um mit einem kopfseitig an der Stoßwelle 2 sitzenden Stoßwerkzeug 3 durch eine repetierende Stoßbewegung an einem nicht näher dargestellten Zahnradrohling als Werkstück durch allmähliches Einarbeiten entlang des Verzahnungsumfanges ein Zahnprofil zu erstellen. Es kann sich dabei um alle Arten von Verzahnungsgeometrien, wie eine Stirn-, Innen-, Kegelrad-, Schräg- und insbesondere auch Planradverzahnung handeln.

Über eine nicht näher dargestellte Spannvorrichtung 4 ist das Stoßwerkzeug 3 auswechselbar am Kopf des Schaftes 5 der Stoßwelle 2 gehalten. Der Schaft 5 selbst weist an seinem dem Stoßwerkzeug 3 abgewandten, hinteren Ende ein Drallwendelprofil 6 auf, das zur Mitte des Schaftes 5 hin durch eine Kolbenschulter 7 begrenzt wird.

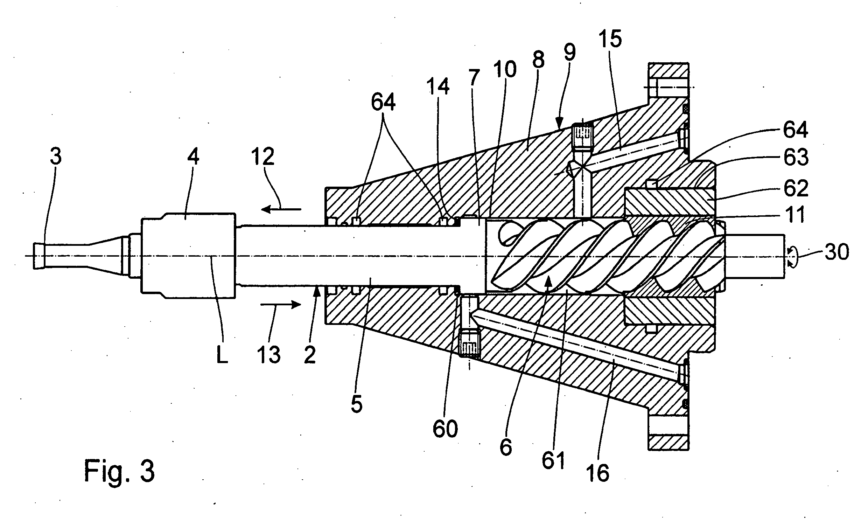

Die Stoßwelle 2 ist - wie insbesondere aus Fig. 3 hervorgeht - im Führungskopf 8 eines als Ganzes mit 9 bezeichneten Stoßwellen-Lagerträgers in einem entsprechenden Führungskanal 10 entlang der zentralen Werkzeuglängsachse L hin- und herverschiebbar sowie darin drehbar gelagert. In das Drallwendelprofil 6 greift dabei ein als formentsprechendes Gegenprofil gestalteter Dichtkörper 11 fluiddicht ein, sodass bei einer Stoßhubbewegung (Pfeil 12) bzw. Rückhubbewegung (Pfeil 13) der Stoßwelle 2 gleichzeitig eine Drehbewegung 30 um deren Längsachse L bedingt durch den Eingriff von Dichtkörper 11 und stationärem Drallwendelprofil 6 stattfindet. Die Stoß- und Rückhubbewegungen 12, 13 werden hydraulisch durch eine entsprechend wechselseitig gesteuerte Beaufschlagung der veränderlichen Teilräume 60, 61 zwischen Dichtkörper 11 und Kolbenschulter 7 einerseits und Kolbenschulter 7 und Anschlagschulter 14 andererseits im Führungskanal 10 erzeugt. Das Druckfluid wird dabei über entsprechend im Führungskopf 8 ausmündende Druckleitungen 15, 16 unter Steuerung durch ein entsprechendes Mehrwegeventil im Stoßwellen-Lagerträger 9 bereitgestellt.

Erkennbar bilden die beiden erwähnten Teilräume 60, 61 den Arbeitszylinder der hydraulischen Kolben-Zylinder-Anordnung, deren Kolbenfunktion von der Kolbenschulter 7 an der Stoßwelle 2 wahrgenommen wird. Der Dichtkörper 11 bildet dabei integral den Abschlussdeckel dieses Arbeitszylinders 60, 61.

Der Dichtkörper 11 ist ein direkt an das Drallwendelprofil 6 angeformtes Kunststoff-Gussteil aus einem formbeständigen, jedoch nicht am Metall des Drallwendelprofils 6 haftenden Material. Das Gegenprofil 11 bildet also eine an das Drallwendelprofil 6 angegossene Kunststoff-Mutter, die in einem Tragring 62 unverrückbar sitzt. Mit diesem Tragring 62 ist der Dichtkörper 11 in einer entsprechenden Aufnahme 63 an der Rückseite des Führungskopfes 8 festgelegt. Bei einem Austausch der Stoßwelle 2 wird diese zusammen mit den im Tragring 62 und dem darin sitzenden Dichtprofil 11 getauscht, wozu lediglich die nicht näher dargestellten Befestigungselemente des Tragringes 62 gelöst und die Stoßwelle 2 aus dem Führungskopf nach hinten herausgezogen werden müssen.

Der Schaft 5 der Stoßwelle 2 sowie das Drallwendelprofil 6 sind im Führungskanal 10 bzw. im Dichtkörper 11 hydrostatisch gelagert. In Fig. 3 sind in diesem Zusammenhang lediglich Leitungskanäle 64 zur Zuleitung der Hydraulikflüssigkeit an den entsprechenden Lagerstellen eingezeichnet.

Wie aus Fig. 1 deutlich wird, sitzt der Führungskopf 8 an einem das Gehäuse des Maschinengehäuses 1 durchquerenden rohrähnlichen Trägerschaft 17, dessen stoßwerkzeugseitiges Ende als Flansch 18 zur Anbindung des Führungskopfes 8 ausgebildet ist. Der Flansch 18 liegt abgedichtet, aber mit Spiel in einer Durchgangsöffnung 19 der Wand 20 des Maschinengehäuses 1.

Der Stoßwellen-Lagerträger 9 ist mit seinem Trägerschaft 17 im Bereich etwa von der Mitte bis zum Flansch 18 in einer Lagerbüchse 21 drehbar um die Längsachse L gelagert. Diese Drehbewegung stellt die der Drallbewegung der Stoßwelle 2 überlagerte Wälzbewegung des Stoßwerkzeuges 3 zur Verfügung. Der Trägerschaft 17 ist dabei über eine nicht näher gestellte hydrostatische Lagerung in der Lagerbüchse 21 drehgelagert.

Als Drehantrieb für den Stoßwellen-Lagerträger 9 und damit die Stoßwelle 2 zur Erzeugung der Wälzbewegung 31 ist das stoßwerkzeugabseitige Ende 22 des Trägerschaftes 17 in noch näher zu beschreibender Weise koaxial in einer Riemenscheibe 24 montiert, die in einer am Maschinengehäuse 1 angebrachten Lagerdeckel-Baugruppe 25 drehbar gelagert ist. Diese Riemenscheibe 24 wird von einem Zahnriemen 26 angetrieben, der über ein auf der Abtriebswelle 27 eines nicht näher gestellten Antriebsmotores sitzendes Antriebsritzel 28 sowie eine Spannrolle 29 läuft.

Neben der bereits beschriebenen Stoß- und Rückhubbewegung 12, 13 der bei Stoß- und Rückhub in entgegengesetzter Richtung weisenden Drallrotation 30 der Stoßwelle 2 im Führungskopf 8 und der während der gesamten Werkzeugherstellung in eine gleichbleibende Drehrichtung weisenden Wälzrotation 31 aufgrund der Drehbewegung des Stoßwellen-Lagerträgers 9 muss das Stoßwerkzeug 3 für bestimmte Bearbeitungsaufgaben auch noch eine laterale Auslenkbewegung während der Rückhubbewegung 13 vollführen. Diese Auslenkbewegung weist senkrecht zur Längsachse L (entsprechend senkrecht zur Papierebene von Fig. 1) und kann durch eine minimale Schwenkbewegung 32 (Fig. 2) der Lagerbüchse 21 im Maschinengehäuse 1 um eine im Bereich des Endes 22 des Trägerschaftes 17 liegende Schwenkachse bereitgestellt werden. Dazu ist die Lagerbüchse 21 etwa mittig bezogen auf ihre Länge über blattfederartige Aufhängeplatten 33, 34 mit dem Maschinengehäuse 1 verbunden. Das Paar von Aufhängeplatten 33, 34 ist radial bezüglich der Längsachse L gegenüberliegend vertikal oben und unten angeordnet. Dazu sind die langgestreckt rechteckigen Aufhängeplatten 33, 34 mit ihrem der Lagerbüchse 21 zugewandten Rand jeweils durch einen Niederhalter 35, 36 über Schrauben 37 eingespannt. Desgleichen sind die dem Maschinengehäuse 1 zugewandten Ränder über Niederhalter 36 und entsprechende Schrauben 38 am Maschinengehäuse 1 eingespannt. Die gezeigten Aufhängeplatten 33, 34, die in einer gemeinsamen, durch die Längsachse L verlaufenden Vertikalebene V angeordnet sind, bieten in dieser Ebene eine hohe Steifigkeit und damit eine sehr stabile Lagerung. Rechtwinklig zur Vertikalebene V hingegen erlaubt diese Lagerung die gewünschte Schwenkbewegung 32, für die unter praktischen Gesichtspunkten eine Amplitude von Bruchteilen eines Millimeters bis maximal etwa einen Millimeter genügt.

Das hintere Ende 22 des Stoßwellen-Lagerträgers 9 ist nun in einer vom Prinzip her ähnlichen Aufhängung in Form der Aufhängeringscheibe 23 gelagert. Diese ist mit ihrem inneren Rand 39 über einen Einstellring 40 mittels Schrauben 41 an der rückwärtigen Stirnseite 42 des Trägerschaftes 17 befestigt. Quer zu diesen axialen Schrauben 41 verlaufen radiale Stellschrauben 43, mit deren Hilfe der Einstellring 40 in seiner Lage feinjustiert und damit die Stoßwelle 2 mit ihrem Stoßwerkzeug 3 exakt rundgerichtet werden kann.

An seinem radialen Außenrand ist die Aufhängeringscheibe 23 wiederum durch axiale Schrauben 44 mit der Riemenscheibe 24 unter Zwischenlage eines Niederhalterrings 45 befestigt. Da die Aufhängeringscheibe 23 wiederum in ihrer Ringebene selbst sehr stabil ist, ist eine saubere Axialposition der Stoßwelle 2 gewährleistet. Zur Bereitstellung der Schwenkbewegung 32 am stoßwerkzeugseitigen Ende des Trägerschaftes 17 kann nun der Trägerschaft 17 um jede beliebige radiale, in der Ringebene liegende Schwenkachse durch entsprechende Verwindung der Aufhängeringscheibe 23 quer zu ihrer Ringebene ausgelenkt werden.

Zur Erzeugung der Schwenkbewegung 32 ist ein hydraulischer Antrieb vorgesehen, der anhand von Fig. 2 zu erläutern ist. Über durch das Maschinengehäuse 1 von oben bzw. von der Seite her eingeführte Anschlussstutzen 46, 47 kann das Hydraulikfluid eines hydraulischen Antriebes in die Lagerbüchse 21 eingeleitet und wieder daraus abgeleitet werden. Über innere Kanäle 48 mit entsprechenden Ventilfunktionen werden die Bewegungen 12, 13, 30 der Stoßwelle 2 im Stoßwellen-Lagerträger 9 sowie die Schwenkbewegung 32 der Lagerbüchse 21 erzeugt. Letztere weist an ihrer Außenseite an horizontal und radial gegenüberliegenden Positionen jeweils eine Ausnehmung 49, 50 auf, in die zwei kolbenzylinderartige Anschlagstücke 51, 52 unter Bildung eines Arbeitsraumes 53, 54 eingreifen.

Das Anschlagstück 51 stützt sich an einem festen, im Maschinengehäuse 1 montierten Anschlagbolzen 55 ab und bildet damit den Festanschlag, der die laterale Position der Längsachse L während des Stoßhubes 12 definiert.

Das gegenüberliegende Anschlagstück 52 stützt sich an einem Verstellanschlag 56 ab, der über einen Drehknopf 57 in seiner Radialposition verstellbar in einer Führungsmuffe 28 im Maschinengehäuse 1 gelagert ist. Der Verstellanschlag 56 ist dabei so fein verstellbar, dass zwischen dem Anschlagstück 52 und dem Verstellanschlag 56 "Luft" von Bruchteilen von Millimetern bis etwa ein Millimeter eingestellt werden kann. Es werden nun über die im Einzelnen nicht näher dargestellten Kanäle 48 die beiden Arbeitsräume 53, 54 wechselseitig mit Druckfluid versorgt. Wird der bezogen auf Fig. 2 rechte Arbeitsraum 54 druckbeaufschlagt, so stellt sich die Lagerbüchse 21 in ihre Position zur Durchführung eines Stoßhubes unter Anlage des Anschlagstückes 51 an dem links gelegenen Anschlagbolzen 55 ein. Nach Durchführung des Stoßhubes 12 wird der linke Arbeitsraum 53 mit Druckfluid beaufschlagt und der rechte Arbeitsraum 54 entlastet, sodass die Lagerbüchse 21 aufgrund des Schwenkfreiheitsgrades durch die Aufhängeplatten 33, 34 nach rechts bezogen auf Fig. 2 um eine minimale Auslenkung verlagert wird, bis das Anschlagstück 52 am Verstellanschlag 56 anliegt. In dieser Position kann das Stoßwerkzeug 3 seinen Rückhubbewegung 13 vollführen, ohne dass es in Eingriff mit dem Werkstück kommt. Während dieser hin- und hergehenden Schwenkbewegung 32 dreht sich der Stoßwellen-Lagerträger 9 bedingt durch den Zahnriemenantrieb am hinteren Ende des Trägerschaftes 17 um die Längsachse L, sodass die in der Aufhängeringscheibe 23 definierte Schwenkachse um ihren Schnittpunkt mit der Längsachse der Stoßwelle 2 auf der Aufhängeringscheibe 23 relativ zu dieser rotiert.

Die in den Fig. 1 und 2 noch dargestellten, nicht jedoch näher bezeichneten Anschlussstutzen und Maschinenelemente bedürfen keiner näher Erörterung, da sie in an sich bekannter Weise der Realisierung hydrostatischer Lager innerhalb der zueinander beweglichen Maschinenteile dienen.

## Patentansprüche

1. Werkzeugstößelvorrichtung, insbesondere für eine Wälz-Stoß-Maschine zur Herstellung von Zahnrädern, mit
- einer ein Bearbeitungswerkzeug (3) tragenden Stößelwelle (2),
- einem Führungskopf, der einen Führungskanal (10) zur kombinierten Dreh- und Schiebeführung der Stößelwelle (2) aufweist, und
- einer Lager- und Antriebseinrichtung für die Stößelwelle (2) umfassend eine hydraulische Kolben-Zylinder-Anordnung für deren Schiebeantrieb und eine Dralleinheit für deren Drehantrieb, wobei
= der Arbeitszylinder (60, 61) des hydraulischen Antriebes im Führungskanal (10) angelegt und dessen Kolben (7) an der Stößelwelle (2) angeordnet ist und
= die Dralleinheit ein Drallwendelprofil (6) an der Stößelwelle (2) aufweist, das mit einem stationären Gegenprofil (11) in Eingriff steht,
**dadurch gekennzeichnet, dass**
- das Drallwendelprofil (6) und das Gegenprofil (11) fluiddicht in Eingriff stehen und das als Dichtkörper wirkende Gegenprofil (11) integral einen Abschlussdeckel des Arbeitszylinders (60, 61) bildet.

2. Werkzeugstößelvorrichtung nach Anspruch 1, **dadurch gekennzeichnet, dass** das Gegenprofil (11) an das Drallwendelprofil (6) der zugehörigen Stößelwelle unter gegenseitiger Verdrehbarkeit direkt angeformt ist.

3. Werkzeugstößelvorrichtung nach Anspruch 2, **dadurch gekennzeichnet, dass** das Gegenprofil (11) als Kunststoff-Mutter an das Drallwendelprofil (6) angegossen ist.

4. Werkzeugstößelvorrichtung nach einem der vorgenannten Ansprüche, **dadurch gekennzeichnet, dass** das Gegenprofil (11) in einem mit dem Führungskopf (8) lösbar verbundenen Tragring (62) sitzt.

5. Werkzeugstößelvorrichtung nach einem der vorgenannten Ansprüche, **dadurch gekennzeichnet, dass** die Stößelwelle (2) mit dem das Gegenprofil (11) tragenden Teil, insbesondere mit der Kunststoff-Mutter und gegebenenfalls dem Tragring (62), gemeinsam austauschbar an der Werkzeugstößelvorrichtung angebracht sind.

6. Werkzeugstößelvorrichtung nach einem der vorgenannten Ansprüche, **dadurch gekennzeichnet, dass** die Stößelwelle (2) im Führungskanal (10) und/oder im Gegenprofil (11) hydrostatisch gelagert ist.

7. Wälz-Stoß-Maschine zur Herstellung von Zahnrädern, **gekennzeichnet durch** eine Werkzeugstößelvorrichtung nach einem der vorgenannten Ansprüche zur Halterung des Stoßwerkzeuges (3).

## Claims

1. Tool ram device, in particular for a slotting machine for producing gearwheels, comprising
- a ram shaft (2) holding a machining tool (3),
- a guiding head, which comprises a guiding channel (10) for the combined rotational and slide guiding of the ram shaft (2) and
- a bearing and drive device for the ram shaft (2) comprising a hydraulic piston-cylinder arrangement for its sliding drive and a twisting unit for its rotary drive, wherein
= the working cylinder (60, 61) of the hydraulic drive is placed in the guiding channel (10) and its piston (7) is arranged on the ram shaft (2) and
= the twisting unit comprises a twisting coil profile (6) on the ram shaft (2) which is in engagement with a stationary counter profile (11),
**characterised in that**
- the twisting coil profile (6) and the counter profile (11) are in engagement in a fluid-tight manner and the counter profile (11) acting as a sealing body forms integrally a sealing cover for the working cylinder (60, 61).

2. Tool ram device according to claim 1, **characterised in that** the counter profile (11) is formed directly on the twisting coil profile (6) of the associated ram shaft with mutual rotatability.

3. Tool ram device according to claim 2, **characterised in that** the counter profile (11) is cast as a plastic nut onto the twisting coil profile (6).

4. Tool ram device according to one of the preceding claims, **characterised in that** the counter profile (11) sits in a support ring (62) connected detachably to the guiding head (8).

5. Tool ram device according to one of the preceding claims, **characterised in that** the ram shaft (2) with the part supporting the counter profile (11), in particular with the plastic nut and possibly the support ring (62), are attached jointly replaceably on the tool ram device.

6. Tool ram device according to one of the preceding claims, **characterised in that** the ram shaft (2) is mounted hydrostatically in the guiding channel (10) and/or in the counter profile (11).

7. Slotting machine for the production of gearwheels, **characterised by** a tool ram device according to one of the preceding claims for holding the ram tool (3).

## Revendications

1. Dispositif de vérin pour un outil, en particulier, pour une machine à mortaiser en développante, pour la fabrication de roues d'engrenages, comprenant
- un arbre de percussion (2) portant un outil de travail (3),
- une tête de guidage qui présente un canal de guidage (10) pour combiner un guidage en rotation et un guidage en glissement de l'arbre de percussion (2), et
- un dispositif de logement et un dispositif d'entraînement pour l'arbre de percussion (2) comprenant un ensemble piston-cylindre hydraulique pour son entraînement par glissement et un dispositif de dérivation pour son entraînement en rotation, où
= le cylindre de travail (60, 61) de l'entraînement hydraulique est agencé dans le canal de guidage (10) et dont le piston (7) est agencé à l'arbre de percussion (2) et
= le dispositif de dérivation présente un profil hélicoïdal (6) sur l'arbre de percussion (2), qui s'engrène avec un contre-profil (11) stationnaire,
**caractérisé en ce que**
- le profil hélicoïdal (6) et le contre-profil (11) sont engrenés de manière étanche contre les fluides et le contre-profil (11), qui joue le rôle d'un corps d'étanchéité, forme intégralement un couvercle de fermeture du cylindre de travail (50, 61)

2. Dispositif de vérin pour un outil selon la revendication 1 **caractérisé en ce que** le contre -profil (11) est directement rapporté par formage au profil hélicoïdal (6) de l'arbre de percussion correspondant par un travail en torsion mutuel.

3. Dispositif de vérin pour un outil selon la revendication 2, **caractérisé en ce que** le contre-profil (11) est surmoulé sur le profil hélicoïdal (6) sous la forme d'une matrice en matière synthétique.

4. Dispositif de vérin pour un outil selon l'une des revendications précitées, **caractérisé en ce que** le contre-profil (11) est placé dans un anneau de support (62) relié de manière détachable à la tête de guidage (8)

5. Dispositif de vérin pour un outil selon l'une des revendications précitées **caractérisé en ce que** l'arbre de percussion (2) est rapporté sur le dispositif de vérin avec la partie portant le contre-profil (11), en particulier avec la matrice en matière synthétique et éventuellement l'anneau de support (62), pouvant être échangés ensemble.

6. Dispositif de vérin pour un outil selon l'une des revendications précitées, **caractérisé en ce que** l'arbre de percussion (2) est logé de manière hydrostatique dans le canal de guidage (10) et/ou dans le contre-profil (11).

7. Machine à mortaiser en développante pour la fabrication de roues d'engrenages, **caractérisée par** un dispositif de vérin pour un outil selon l'une des revendications précitées pour le support de l'outil de mortaisage (3).
